# EUROPEAN PATENT APPLICATION

(11) **EP 4 755 682 A1**
(43) Date of publication of application: **10.06.2026**
(21) Application number: 24869716.1
(22) Date of filing: 07.05.2024
(51) Int. Cl.: B60K 1/04, B60N 2/005, B60N 2/01

(54) **VEHICLE**

(30) Priority: 27.09.2023 CN 202322642524 U
(71) Applicant: Contemporary Amperex Technology Co., Limited, Ningde, Fujian 352100 (CN)
(72) Inventor: CHEN, Wei, Ningde, Fujian 352100 (CN); NIE, Xianzhen, Ningde, Fujian 352100 (CN)
(74) Representative: Ran, Handong
(86) International application number: PCT/CN2024/091405
(87) International publication number: WO 2025/066148

(57) **Abstract**

A vehicle, the vehicle comprising: a battery and seating; a protruding platform is arranged on the top surface of the battery, and the seating is arranged above the battery; the seating comprises seats used to allow passengers to sit; the protruding platform is located below the seating, and in a projection perpendicular to the vertical direction, and at least part of the projection of the protruding platform is located within the range of projections of the seats. By providing the protruding platform on the battery, an increase in the battery volume within the vehicle is facilitated, and consequently an increase of battery capacity is facilitated; also, the protruding platform utilizes space below the seats, lowering the probability that passengers come into contact with the protruding platform when riding in the vehicle, thus mitigating the provision of the protruding platform encroaching on normal active space of passengers by the arrangement of the protruding platform. User experience is improved, and the space utilization rate in the vehicle is improved.

## Description

### CROSS-REFERENCE TO RELATED APPLICATIONS

The present application claims priority to Chinese Patent Application No. 202322642524.8, filed with the China National Intellectual Property Administration on September 27, 2023 and entitled "VEHICLE", which is incorporated herein by reference in its entirety.

### TECHNICAL FIELD

Embodiments of the present disclosure relate to the technical field of vehicles, and in particular, to a vehicle.

### BACKGROUND

In recent years, new energy automobiles are increasingly favored in the market.

A new energy automobile is provided with a battery having a relatively large volume. Generally, the battery is mainly arranged at the lower part of a passenger compartment.

When the new energy automobile uses a module driven by electric energy, the magnitude of a battery capacity is directly related to a maximum cruising range of the vehicle. Therefore, within a limited space of the vehicle, how to utilize as much space as possible for arranging the battery directly affects the maximum cruising range of the vehicle, which is of great significance for relieving the range anxiety of a user, reducing the charging frequency, and improving user experience.

### SUMMARY

In view of this, embodiments of the present disclosure expect to provide a vehicle that can improve the space utilization rate of a battery for internal space of the vehicle.

To achieve the foregoing objective, the technical solutions of embodiments of the present disclosure are implemented in this way:

Embodiments of the present disclosure provide a vehicle. The vehicle includes a battery and a seat. A protruding platform is arranged on a top surface of the battery. The seat is arranged above the battery. The seat includes a seat cushion allowing a passenger to sit on. The protruding platform is located below the seat, and in a projection perpendicular to a vertical direction, at least a part of a projection of the protruding platform is located within a projection range of the seat cushion.

Embodiments of the present disclosure provide the vehicle. By arranging the protruding platform on the battery, the volume of the battery within the vehicle can be increased, thereby increasing the capacity of the battery. Also, the protruding platform utilizes space below the seat cushion, to reduce the probability of passengers colliding with the protruding platform when riding in the vehicle, thereby reducing the occupation of normal active space of passengers caused by the arrangement of the protruding platform, improving user experience, and improving the space utilization rate within the vehicle.

In some embodiments, there are a plurality of seats. The plurality of seats are divided into at least two rows spaced apart in a length direction of the vehicle. At least one row has a plurality of seats with a first gap formed between the seats spaced apart in a width direction of the vehicle. A part of the protruding platform is located in the first gap.

In this way, the protruding platform can utilize space in the first gap, so that the volume of the battery is increased, the probability of passengers colliding with the protruding platform when riding is reduced, interference of the protruding platform to normal activities of passengers is reduced, and the space utilization rate within the vehicle is improved.

In some embodiments, the protruding platform extends in the length direction of the vehicle and is partially located in the first gap.

In this way, on the one hand, the protruding platform extends in the length direction of the vehicle. When a projection area of the protruding platform perpendicular to the vertical direction is particular, it is conducive to reducing the dimension of the protruding platform in the width direction of the vehicle, so as to reduce interference of the protruding platform to a plurality of passengers when riding in the vehicle, thereby improving user experience. On the other hand, the protruding platform can utilize more space in the first gap, thereby further improving the space utilization rate within the vehicle.

In some embodiments, the protruding platform extends below the seat cushions of an adjacent row of seats.

In this way, while the space utilization rate of space that is not frequently used by passengers between two adjacent rows is improved, the probability of interference to riding and activities of passengers is reduced. It is conducive to improving the space utilization rate of the battery for the internal space of the vehicle and increasing the capacity of the battery.

In some embodiments, the protruding platform extends in the width direction of the vehicle. The protruding platform is partially located below the seat cushion while being partially located in the first gap.

In this way, the protruding platform can make full use of space below the seat cushion and space in the first gap. It is conducive to improving the space utilization rate of the battery for the internal space of the vehicle and increasing the capacity of the battery.

In some embodiments, there are a plurality of seats. The plurality of seats are divided into at least two rows spaced apart in the length direction of the vehicle. At least one row includes one seat which extends in the width direction of the vehicle, and a width of the seat is not less than a width of the top surface of the battery. The protruding platform extends in the width direction and is located below the row of seats.

In this way, the protruding platform can increase the dimension thereof in the width direction of the vehicle as much as possible, thereby better utilizing space below the seat. It is conducive to improving the space utilization rate of the battery for the internal space of the vehicle and increasing the capacity of the battery.

In some embodiments, there are at least two protruding platforms. The protruding platforms extend in the length direction of the vehicle. The two protruding platforms are respectively located at one end of the battery in the width direction of the vehicle. The seat is located between the two protruding platforms.

In this way, interference of the protruding platform to leg and foot activities of passengers can be reduced, thereby improving the use experience of passengers.

In some embodiments, at least a part of the seat cushion and the top surface of the battery are spaced apart in the vertical direction to form a second gap. At least a part of the protruding platform is located in the second gap. In this way, an avoidance space is formed between the seat cushion and the top surface of the battery, so as to arrange the protruding platform.

In some embodiments, the seat includes a support leg. The seat cushion and the battery are spaced apart in the vertical direction to form the second gap. The support leg is connected between the seat cushion and the battery. In this way, the seat cushion and the protruding platform can be spaced apart, so that the shape of the seat cushion is regular for placement. Also, it is conducive to releasing heat during operation of the battery, to checking, disassembling, and maintenance through the second gap, for passengers to put feet into the second gap, and for passengers to sit comfortably, thereby improving the riding comfort.

In some embodiments, the support leg is arranged on a top surface of the protruding platform, so that dimensions of the support legs are consistent in the vertical direction. This helps make the dimensions of the support legs uniform, thereby reducing production and manufacturing costs.

Alternatively, there are a plurality of support legs. The plurality of support legs are spaced apart in the width direction of the vehicle. The protruding platform is located between two adjacent support legs in the width direction of the vehicle. In this way, it is conducive to arranging the protruding platform in space between the two support legs, thereby improving the space utilization rate of the battery for the internal space of the vehicle and increasing the capacity of the battery.

In some embodiments, the protruding platform has a height of not greater than 50 cm. The height of the protruding platform is within this range. When the height of the protruding platform is increased as much as possible to increase the volume of the battery and improve the capacity of the battery, the impact of the thickness of the protruding platform on the thickness of the seat cushion is reduced, thereby reducing the negative impact on the riding experience of passengers due to the height of the protruding platform.

In some embodiments, the battery includes an accommodating box and a plurality of battery cells. An accommodating cavity is provided in the accommodating box. The battery cells are arranged in the accommodating cavity. A part of the accommodating box protrudes in a direction away from the battery cells to form the protruding platform. An inner wall of the accommodating cavity corresponding to the part is recessed to form an accommodating groove. At least some battery cells are located in the accommodating groove. In this way, it is conducive to dispose a larger quantity of battery cells or battery cells of a larger volume within the battery, so as to improve the capacity of the battery.

### BRIEF DESCRIPTION OF THE DRAWINGS

FIG. 1 is a schematic diagram of arrangement of a vehicle according to a first embodiment of the present disclosure;
FIG. 2 is a schematic diagram of the embodiment in FIG. 1 under a second perspective;
FIG. 3 is a schematic diagram of the embodiment in FIG. 1 under a third perspective;
FIG. 4 is a schematic diagram of arrangement of a vehicle according to a second embodiment of the present disclosure;
FIG. 5 is a schematic diagram of the embodiment in FIG. 4 under a fourth perspective;
FIG. 6 is a schematic diagram of arrangement of a vehicle according to a third embodiment of the present disclosure;
FIG. 7 is a schematic diagram of the embodiment in FIG. 6 under a fifth perspective;
FIG. 8 is a schematic diagram of arrangement of a vehicle according to a fourth embodiment of the present disclosure;
FIG. 9 is a schematic diagram of the embodiment in FIG. 8 under a sixth perspective;
FIG. 10 is a schematic diagram of the embodiment in FIG. 8 under a seventh perspective;
FIG. 11 is a schematic diagram of arrangement of a vehicle according to a fifth embodiment of the present disclosure;
FIG. 12 is a schematic diagram of the embodiment in FIG. 11 under an eighth perspective;
FIG. 13 is a schematic diagram of the embodiment in FIG. 11 under a ninth perspective;
FIG. 14 is a schematic diagram of a battery according to an embodiment of the present disclosure;
FIG. 15 is a cross-sectional view of the embodiment in FIG. 14;
FIG. 16 is a partially enlarged view of position A in FIG. 15; and
FIG. 17 is a schematic diagram of a vehicle according to an embodiment of the present disclosure.

### Reference Numerals:

10: battery; 10a: accommodating cavity; 10b: accommodating groove; 11: protruding platform; 12: battery cell; 13: accommodating box; 20: seat; 20a: first gap; 20b: second gap; 21: seat cushion; 22: seat back; 23: support leg;
100: vehicle; 30: controller; and 40: motor.

### DETAILED DESCRIPTION

It should be noted that embodiments in the present disclosure and technical features in the embodiments may be combined without conflicts. Detailed descriptions in specific implementations should be understood as explanatory notes for the purpose of the present disclosure and should not be regarded as improper limitations on the present disclosure.

Unless otherwise defined, meanings of all technical and scientific terms used in this specification are the same as those usually understood by a person skilled in the art to which the present disclosure belongs. The terms used in this specification are merely intended to describe objectives of specific embodiments, but are not intended to limit the present disclosure. The terms "including" and "having" and any variants thereof in the specification and claims of the present disclosure and in the description of the accompanying drawings are intended to cover non-exclusive inclusion.

In the description according to the embodiments of the present disclosure, the technical terms "first", "second", "third", and the like are only used for distinguishing different objects, and should not be understood as indicating or implying relative importance or implying the number, specific order or primary and secondary relationship of indicated technical features. In the description according to the embodiments of the present disclosure, "a plurality of" means two or more, unless otherwise expressly and specifically defined.

Reference herein to "an embodiment" means that a particular feature, structure, or characteristic described in connection with the embodiment may be included in at least one embodiment of the present disclosure. The presence of the phrase in various places in the specification does not necessarily refer to the same embodiment, nor is it an independent or alternative embodiment that is mutually exclusive from other embodiments. A person skilled in the art explicitly or implicitly understands that the embodiments described in the specification may be combined with other embodiments.

In the descriptions of embodiments of the present disclosure, the term "and/or" describes only an association relationship for describing associated objects and represents that three relationships may be present. For example, A and/or B may represent the presence of the three cases: A alone, both A and B, and B alone. In addition, the character "/" in this specification usually indicates an "or" relationship between the associated objects.

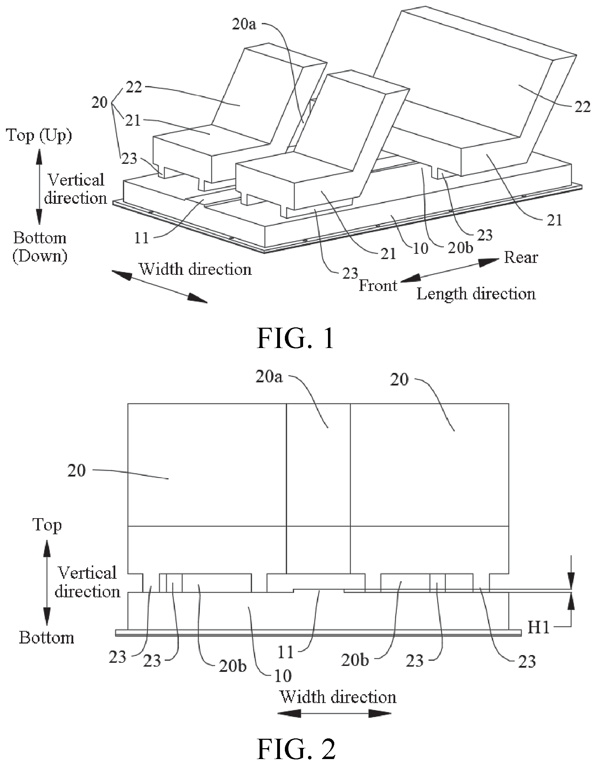

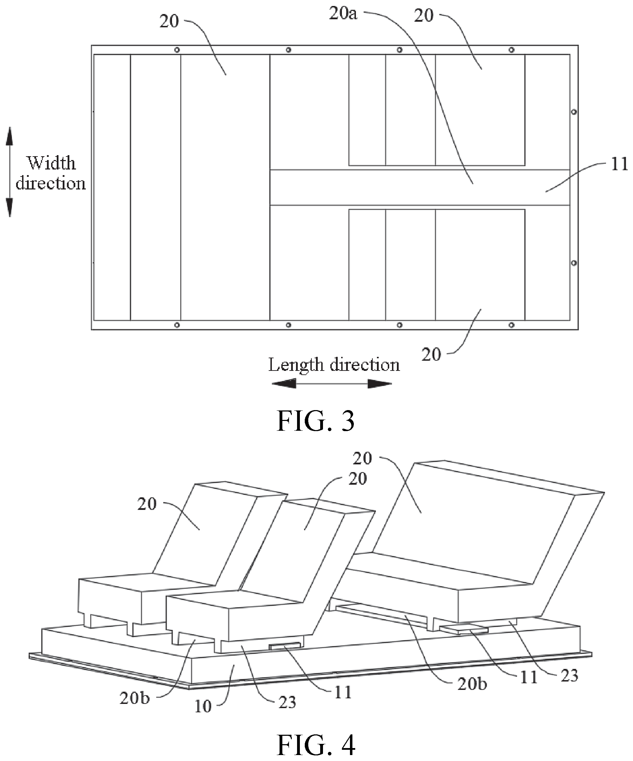

In the descriptions of embodiments of the present disclosure, the orientation or positional relationships indicated by the technical terms "vertical direction", "top", "bottom", "upper", "lower", "front", and "rear" are based on the orientation or positional relationships shown in FIG. 1 and FIG. 2. The orientation or positional relationships indicated by the technical terms "length direction" and "width direction" are based on the orientation or positional relationships shown in FIG. 1 and FIG. 3. These definitions are merely for the convenience of describing embodiments of the present disclosure and simplifying the description, and do not indicate or imply that the referred device or element must have a specific orientation, or be constructed, operated or used in a specific orientation, and thus shall not be construed as a limitation to embodiments of the present disclosure.

In the descriptions of embodiments of the present disclosure, unless otherwise expressly specified and defined, the technical terms "mounted", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. A person of ordinary skill in the art may understand specific meanings of the terms in embodiments of the present disclosure based on specific situations.

In the descriptions of embodiments of the present disclosure, unless otherwise explicitly specified and defined, the technical term "contact" should be understood in a broad sense. The contact may refer to a direct contact or contact through an intermediate medium layer. The contact may involve contact between two entities with essentially no interactive forces, or contact between two entities with interactive forces.

The following describes embodiments of the present disclosure in detail.

A battery of a new energy automobile, particularly a pure electric passenger car, is mainly arranged at the lower part of a passenger compartment of the new energy automobile. If the capacity of a battery is increased, the battery occupies internal space of the passenger compartment when a particular vehicle volume is given. Consequently, the volume of the passenger compartment is reduced, thereby affecting space used by passengers inside the vehicle, and negatively affecting usage experience of passengers. Therefore, to reduce or even eliminate negative impact on riding of passengers, free space inside the passenger compartment should be utilized for the arrangement of the battery.

Embodiments of the present disclosure are intended to provide a vehicle. A battery of the vehicle is provided with a protruding platform, and the protruding platform is located below a seat of the vehicle, thereby improving utilization of space below the seat, improving the space utilization rate of the vehicle, and facilitating arrangement of a battery having a larger capacity.

Embodiments of the present disclosure provide a vehicle 100. Referring to FIG. 1 to FIG. 13, the vehicle 100 includes a battery 10 and a seat 20. A protruding platform 11 is arranged on a top surface of the battery 10. The seat 20 is arranged above the battery 10. The seat 20 includes a seat cushion 21 allowing a passenger to sit on. In a projection perpendicular to a vertical direction, at least a part of a projection of the protruding platform 11 is located within a projection range of the seat cushion 21.

The battery 10, serving as a power supply of the vehicle 100, is configured to supply power for normal operation of the vehicle 100, such as running and device power supply.

The seat 20 is configured for sitting on by a passenger of the vehicle 100 and for placement of an article.

It may be understood that the battery 10 has high structural strength, and the seat 20 is located above the battery 10, so that the battery 10 can directly bear the weight of the seat 20 and the weights of a person and an object on the seat 20, thereby facilitating reduction of structural parts for supporting the seat 20 inside the vehicle 100.

The seat cushion 21 allows a passenger to sit on to bear the weight of the passenger.

The protruding platform 11 is located on the top surface of the battery 10, so that the protruding platform 11 is located inside a passenger compartment. To be specific, the protruding platform 11 is located on a side of the battery 10 away from the ground, thereby facilitating improving a ground gap of the vehicle 100, and avoiding a case that the battery 10 is damaged since the protruding platform 11 collides with a foreign object on the ground during a running process of the vehicle 100.

It may be understood that by providing the protruding platform 11, a total volume of the battery 10 can be increased, thereby facilitating increasing the capacity of the battery 10.

Other parts in the battery 10 may be arranged inside the protruding platform 11.

It may be understood that the protruding platform 11 protrudes from a surface of another part of the battery 10 in the vertical direction.

It may be understood that when a passenger sits on the seat cushion 21, space below a contact surface between the passenger and the seat cushion 21 when sitting includes the seat cushion 21 and a part below the seat cushion 21 due to a sitting posture of the passenger, and it is impossible or difficult for limbs of the passenger to touch.

The protruding platform 11 is located below the seat 20, and the projection of at least a part of the protruding platform 11 is located within the projection range of the seat cushion 21. To be specific, at least a part of the protruding platform 11 is located within the space below the contact surface between the passenger and the seat cushion 21 when sitting.

Embodiments of the present disclosure provide the vehicle 100. By arranging the protruding platform 11 on the battery 10, the volume of the battery 10 within the vehicle 100 can be increased, thereby increasing the capacity of the battery 10. Also, the protruding platform 11 utilizes space below the seat cushion 21, to reduce the probability of passengers colliding with the protruding platform 11 when riding in the vehicle, thereby reducing the occupation of normal active space of passengers caused by the arrangement of the protruding platform 11, improving user experience, and improving the space utilization rate within the vehicle 100.

It may be understood that the protruding platform 11 may extend into the seat cushion 21, or be located below the seat cushion 21.

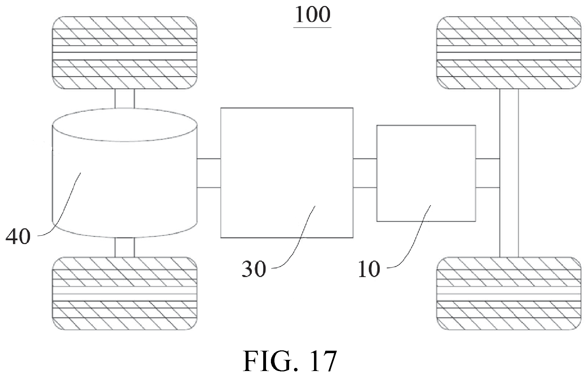

FIG. 17 is a schematic diagram of a structure of a vehicle 100 according to an embodiment of the present disclosure. The vehicle 100 may be a fuel vehicle, a gas vehicle, or a new energy vehicle. The new energy vehicle may be an all-electric vehicle, a hybrid electric vehicle, a range-extended electric vehicle, or the like. As shown in FIG. 17, a battery 10 is arranged inside the vehicle 100. The battery 10 may be arranged at the bottom, head, or tail of the vehicle 100. The battery 10 may be configured to supply power to the vehicle 100. For example, the battery 10 may serve as a power supply for operating the vehicle 100. The vehicle 100 may further include a controller 30 and a motor 40. The controller 30 is configured to control the battery 10 to supply power to the motor 40, for example, to meet operating power requirements during starting, navigation, and running of the vehicle 100.

In some embodiments of the present disclosure, the battery 10 may not only serve as a power supply for operating the vehicle 100, but also serve as a power supply for driving the vehicle 100, in place of or partially in place of fuel or natural gas, to provide driving power for the vehicle 100.

In the battery 10, a plurality of battery cells 12 may be provided. The plurality of battery cells 12 may be connected in series, parallel, or series-parallel. Series-parallel connection means that both series connection and parallel connection exist among the plurality of battery cells 12. The plurality of battery cells 12 may be directly connected in series, in parallel, or in series-parallel together, and then the whole formed by the plurality of battery cells 12 may be placed in an accommodating box 13. Certainly, the battery 10 may be structured such that the plurality of battery cells 12 are first connected in series, in parallel, or in series-parallel to form battery modules, and then the plurality of battery modules are connected in series, in parallel, or in series-parallel to form a whole, which is accommodated in the accommodating box 13. The battery 10 may further include other structures. For example, the battery 10 may further include a bus component for achieving electrical connection among the plurality of battery cells 12.

In embodiments of the present disclosure, the battery cell 12 may be a secondary battery. The secondary battery is a battery cell 12 that may activate an active material through charging after the battery cell 12 is discharged, to continue to be used.

The battery cell 12 may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in embodiments of the present disclosure.

As an example, the battery cell 12 may be a cylindrical battery cell, a prismatic battery cell, a pouch battery cell, or other shapes of battery cells. The prismatic battery cell includes a square-case battery cell, a blade-shaped battery cell, or a multi-prismatic battery. The multi-prismatic battery is, for example, a hexagonal prismatic battery. Embodiments of the present disclosure impose no specific limitations.

The following describes embodiments of the present disclosure in detail.

The specific shape of the protruding platform 11 is not limited. For example, referring to FIG. 1 to FIG. 14, the protruding platform 11 is a cuboid.

There may be one or a plurality of protruding platforms 11.

In an embodiment in which there are a plurality of protruding platforms 11, dimensions of the protruding platforms 11 in the vertical direction may be the same, or may be different.

In some embodiments, the protruding platform 11 is arranged below the seat cushion 21. In contrast, when the protruding platform 11 extends below the seat cushion 21, negative impact of the protruding platform 11 on a buffering effect of the seat cushion 21 can be reduced, and impact on riding comfort of passengers can be reduced.

It may be understood that an arrangement manner of the protruding platform 11 on the top surface of the battery 10 adapts to an arrangement manner of the seat 20 in the vehicle 100.

For example, referring to FIG. 1 to FIG. 3, FIG. 6, and FIG. 7, there are a plurality of the seats 20. The plurality of seats 20 are divided into at least two rows spaced apart in a length direction of the vehicle 100. At least one row has a plurality of seats 20 with a first gap 20a formed between the seats 20 spaced apart in a width direction of the vehicle 100. A part of the protruding platform 11 is located in the first gap 20a.

The length direction of the vehicle 100 refers to a direction of a dimension having a maximum dimension value among three-dimensional dimensions of the vehicle 100. Generally, the length direction of the vehicle 100 is also a forward or backward direction of the vehicle 100 when running in a straight line.

The length direction of the vehicle 100 refers to a direction of a dimension perpendicular to the length direction and a gravity direction among the three-dimensional dimensions of the vehicle 100.

The gravity direction is the vertical direction.

It may be understood that when a passenger sits on the seat cushion 21, it is difficult for the legs of the passenger to enter the first gap 20a due to a sitting posture of the passenger.

In this way, the protruding platform 11 can utilize space in the first gap 20a, so that the volume of the battery 10 is increased, the probability of passengers colliding with the protruding platform 11 when riding is reduced, interference of the protruding platform 11 to normal activities of passengers is reduced, and the space utilization rate within the vehicle 100 is improved.

The quantity of the seats 20 in each row is not limited, for example, is one, two, or three.

It may be understood that other devices in the vehicle 100, such as an armrest, an in-vehicle refrigerator, and a storage box, may further be arranged in the first gap 20a, to improve space utilization rate within the vehicle and improve user experience.

It may be understood that projections of some regions of the protruding platform 11 are located within a projection range of the seat cushion 21, and some regions are located in the first gap 20a.

In some embodiments, in a section of the protruding platform 11 in the length direction of the vehicle 100, one part is located below the seat 20, and the other part is located in the first gap 20a, to further improve the space utilization rate of the battery 10 for the vehicle 100.

It may be understood that space between two adjacent rows of seats 20 in the length direction of the vehicle 100 can be configured for activities of passengers, and on the same row of seats 20, a plurality of passengers sit in the width direction of the vehicle 100.

In some embodiments, referring to FIG. 3, the protruding platform 11 extends in the length direction of the vehicle 100 and is partially located in the first gap 20a.

In this way, on the one hand, the protruding platform 11 extends in the length direction of the vehicle 100. When a projection area of the protruding platform 11 perpendicular to the vertical direction is particular, it is conducive to reducing the dimension of the protruding platform 11 in the width direction of the vehicle 100, so as to reduce interference of the protruding platform 11 to a plurality of passengers when riding in the vehicle, thereby improving user experience. On the other hand, the protruding platform 11 can utilize more space in the first gap 20a, thereby further improving the space utilization rate within the vehicle 100.

It may be understood that for the row of seats 20 adjacent to the first gap 20a in the length direction of the vehicle 100, the probability that a passenger sits on a part corresponding to the first gap 20a in the length direction of the vehicle 100 is relatively low.

It may be understood that the dimension of the protruding platform 11 in the length direction of the vehicle 100 does not exceed the dimension of the top surface of the battery 10 in the length direction of the vehicle 100.

In some embodiments, the seat 20 includes a seat back 22. The seat back 22 is located at the top of the seat cushion 21 and is located at the rear side of the seat back 22. The seat back 22 obliquely extends backward. In a projection perpendicular to the vertical direction, a projection of the seat back 22 of the last row of seat 20 at least partially coincides with the projection of the protruding platform 11. In this way, space below the seat back 22 of the last row of seat 20 can be utilized, thereby improving the utilization rate of internal space of the vehicle 100, and facilitating increasing the capacity of the battery 10.

In some embodiments, referring to FIG. 3, the protruding platform 11 extends below the seat cushions 21 of an adjacent row of seats 20.

In this way, while the space utilization rate of space that is not frequently used by passengers between two adjacent rows is improved, the probability of interference to riding and activities of passengers is reduced. It is conducive to improving the space utilization rate of the battery 10 for the internal space of the vehicle 100 and increasing the capacity of the battery 10.

In some embodiments, referring to FIG. 4, the protruding platform 11 extends in the width direction of the vehicle 100 and is located below the seat cushion 21. In this way, the protruding platform 11 can make full use of space below the seat cushion 21 in the width direction of the vehicle 100. Also, the protruding platform 11 can reduce occupation on space between two adjacent rows of seats 20, thereby reducing interference to activities of passengers and improving passenger experience.

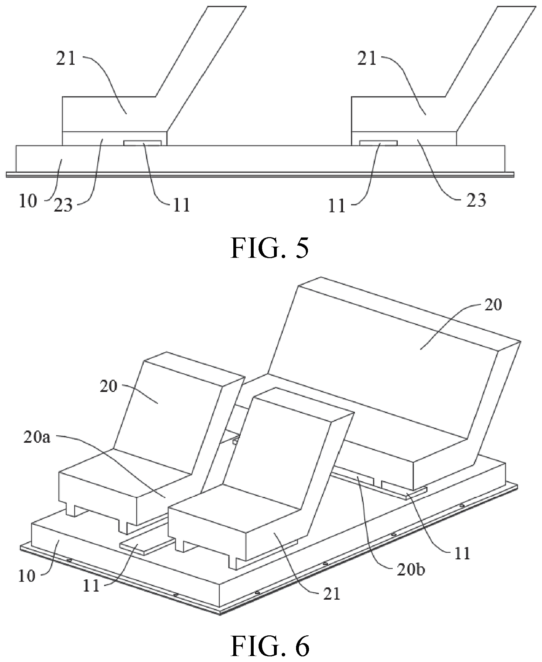

In some embodiments, referring to FIG. 4 and FIG. 5, the protruding platform 11 extends in the width direction of the vehicle 100. The protruding platform 11 is partially located below the seat cushion 21 while being partially located in the first gap 20a.

In this way, the protruding platform 11 can make full use of space below the seat cushion 21 and space in the first gap 20a. It is conducive to improving the space utilization rate of the battery 10 for the internal space of the vehicle 100 and increasing the capacity of the battery 10.

It may be understood that a plurality of first gaps 20a exist between a plurality of seats 20 in the same row, and the protruding platform 11 extends in the width direction of the vehicle 100, so as to pass through all the first gaps 20a and be located below the seat cushion 21 of each seat 20, thereby improving the space utilization rate.

It may be understood that the dimension of the protruding platform 11 in the width direction of the vehicle 100 does not exceed the dimension of the top surface of the battery 10 in the width direction of the vehicle 100.

In some embodiments, referring to FIG. 4 to FIG. 7, there are a plurality of seats 20. The plurality of seats 20 are divided into at least two rows spaced apart in the length direction of the vehicle 100. At least one row includes one seat 20 which extends in the width direction of the vehicle 100, and a width of the seat 20 is not less than a width of the top surface of the battery 10. The protruding platform 11 extends in the width direction and is located below the row of seats 20.

To be specific, the row of seats 20 can make full use of space within the vehicle in the width direction of the vehicle 100, so as to carry more passengers at the same time.

In this way, the protruding platform 11 can increase the dimension thereof in the width direction of the vehicle 100 as much as possible, thereby better utilizing space below the seat 20. It is conducive to improving the space utilization rate of the battery 10 for the internal space of the vehicle 100 and increasing the capacity of the battery 10.

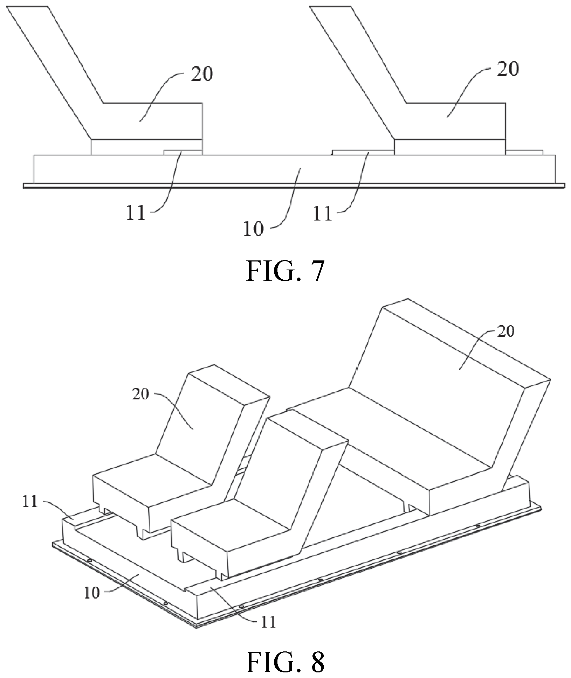

In some embodiments, referring to FIG. 6 and FIG. 7, there are two protruding platforms 11. One of the protruding platforms 11 extends in the length direction and is at least partially located in the first gap 20a between two seats 20 in the front row. The other protruding platform extends in the width direction and is located below the seat 20 in the rear row, and the front protruding platform 11 is spaced apart from the back protruding platform 11 in the length direction of the vehicle 100. In this way, on the one hand, it is conducive to improving the space utilization rate of the battery 10 for the internal space of the vehicle 100 and increasing the capacity of the battery 10. On the other hand, interference of the front protruding platform 11 to activities of a passenger on the seat 20 in the rear row is reduced, thereby improving use experience of the passenger.

It may be understood that when a passenger sits on the seat cushion 21, the legs and feet of the passenger have relatively large activity space.

In some embodiments, referring to FIG. 8 to FIG. 10, there are at least two protruding platforms 11. The protruding platforms 11 extend in the length direction of the vehicle 100. The two protruding platforms 11 are respectively located at one end of the battery 10 in the width direction of the vehicle 100. The seat 20 is located between the two protruding platforms 11.

To be specific, the seat 20 is located within a region between the two protruding platforms 11 on the top surface of the battery 10.

In this way, interference of the protruding platforms 11 to leg and foot activities of passengers can be reduced, thereby improving the use experience of passengers.

It may be understood that dimensions of the protruding platforms 11 in the length direction may be the same or may be different.

It may be understood that the protruding platforms 11 extend to two ends of the battery 10 in the length direction of the vehicle 100 in the length direction, to further improve the space utilization rate of the battery 10 for the internal space of the vehicle 100, and increase the capacity of the battery 10.

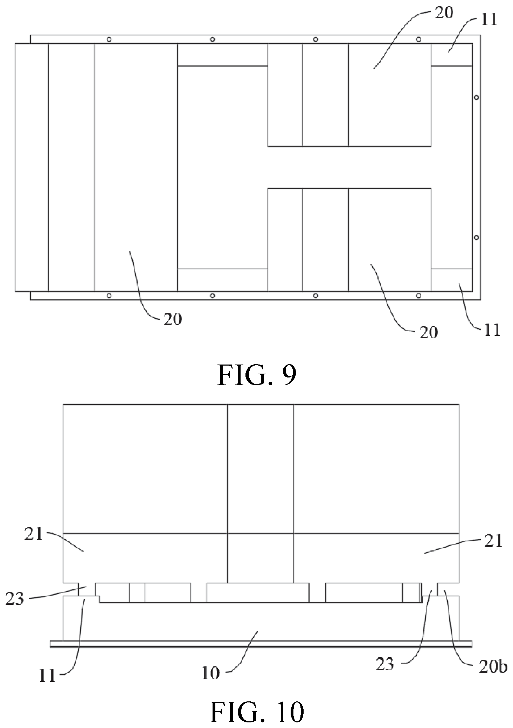

It may be understood that referring to FIG. 8 and FIG. 9, the protruding platforms 11 extend below the seat cushions 21 of at least two rows of seats 20 in the length direction, thereby improving the utilization rate of space below the seat cushions 21.

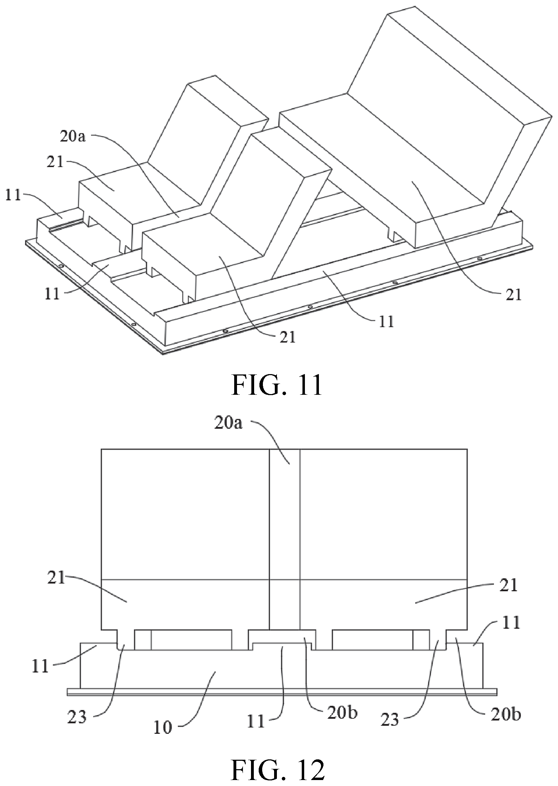

In some embodiments, referring to FIG. 11 to FIG. 13, there are three protruding platforms 11. The protruding platforms 11 extend in the length direction of the vehicle 100. Two of the protruding platforms 11 are respectively located at one end of the battery 10 in the width direction of the vehicle 100, and the other protruding platform 11 penetrates in the first gap 20a. In this way, it is conducive to improving the space utilization rate of the battery 10 for the internal space of the vehicle 100 and increasing the capacity of the battery 10.

It may be understood that the seat 20 and the battery 10 are detachably connected to each other, so as to replace and maintain the seat 20 and the battery 10 respectively.

A specific manner in which the battery 10 can carry and place the seat 20 is not limited.

In some embodiments, a bottom surface of the seat cushion 21 is completely adhered to the top surface of the battery 10. In this way, the pressure of a contact part between the seat cushion 21 and the battery 10 is reduced, and the probability of damage to the battery under compression 10 is reduced.

In some embodiments, referring to FIG. 2, FIG. 10, and FIG. 12, at least a part of the seat cushion 21 and the top surface of the battery 10 are spaced apart in the vertical direction to form a second gap 20b. At least a part of the protruding platform 11 is located in the second gap 20b.

In this way, an avoidance space is formed between the seat cushion 21 and the top surface of the battery 10, so as to arrange the protruding platform 11.

It may be understood that an inner wall of the second gap 20b in the vertical direction is spaced apart from the protruding platform 11, to reduce the probability that the protruding platform 11 is damaged under compression since the protruding platform 11 is in direct contact with the seat cushion 21.

In some embodiments, referring to FIG. 12, a part of the protruding platform 11 located below the seat cushion 21 is completely located in the second gap 20b, to further reduce the probability that the protruding platform 11 is damaged under compression.

A specific manner of forming the second gap 20b is not limited.

For example, referring to FIG. 1 and FIG. 2, the seat 20 includes a support leg 23. The seat cushion 21 and the battery 10 are spaced apart in the vertical direction to form the second gap 20b. The support leg 23 is connected between the seat cushion 21 and the battery 10.

In this way, the seat cushion 21 and the protruding platform 11 can be spaced apart, so that the shape of the seat cushion 21 is regular for placement. Also, it is conducive to releasing heat during operation of the battery 10, to checking, disassembling, and maintenance through the second gap 20b, for passengers to put feet into the second gap 20b, and for passengers to sit comfortably, thereby improving the riding comfort.

It may be understood that a connection position between the support leg 23 and the battery 10 is not limited. Referring to FIG. 6, the connection position may be located on the protruding platform 11. Referring to FIG. 1, the connection position may alternatively be located in another region of the top surface of the battery 10.

The support leg 23 is detachably connected to the battery 10.

It may be understood that there may be one or more support legs 23 without limitation.

In some embodiments, referring to FIG. 6, the support leg 23 is arranged on a top surface of the protruding platform 11, so that dimensions of the support legs 23 are consistent in the vertical direction. This helps make the dimensions of the support legs 23 uniform, thereby reducing production and manufacturing costs.

In some embodiments, referring to FIG. 2, there are a plurality of support legs 23. The plurality of support legs 23 are spaced apart in the width direction of the vehicle 100. The protruding platform 11 is located between two adjacent support legs 23 in the width direction of the vehicle 100.

In this way, it is convenient for the arrangement of the protruding platform 11 to utilize space between the two support legs 23, thereby improving the space utilization rate of the battery 10 for the internal space of the vehicle 100, and increasing the capacity of the battery 10.

In some embodiments, referring to FIG. 2, a height of the protruding platform 11 does not exceed 50 cm (centimeter). To be specific, H1≤50 cm.

The height of the protruding platform 11 refers to a dimension of the protruding platform 11 in a height direction.

The height of the protruding platform 11 is within this range. When the height of the protruding platform 11 is increased as much as possible to increase the volume of the battery 10 and improve the capacity of the battery 10, the impact of the thickness of the protruding platform 11 on the thickness of the seat cushion 21 is reduced, thereby reducing the negative impact on the riding experience of passengers due to the height of the protruding platform 11.

A specific height value of the protruding platform 11 is not limited, for example, 10 cm, 20 cm, 30 cm, 40 cm, or 50 cm.

The function of forming the protruding platform 11 on the battery 10 is not limited.

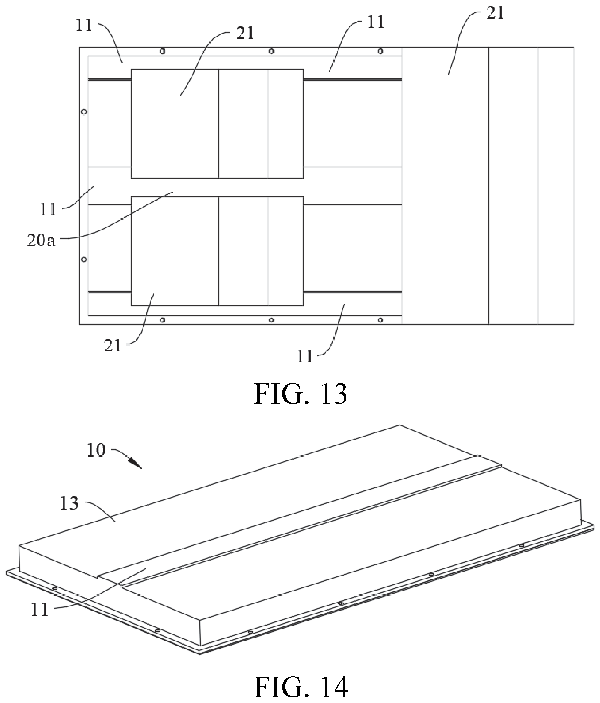

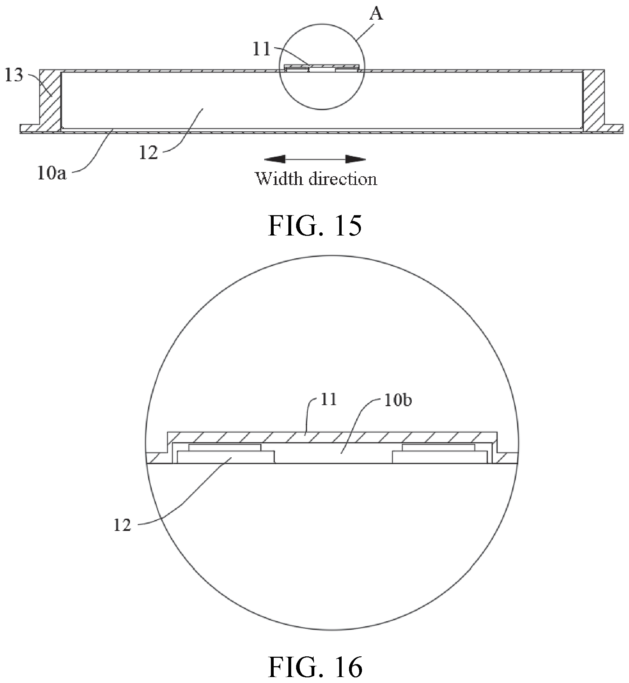

In some embodiments, referring to FIG. 14, FIG. 15, and FIG. 16, the battery 10 includes an accommodating box 13 and a plurality of battery cells 12. An accommodating cavity 10a is provided in the accommodating box 13. The battery cells 12 are arranged in the accommodating cavity 10a. A part of the accommodating box 13 protrudes in a direction away from the battery cells 12 to form the protruding platform 11. An inner wall of the accommodating cavity 10a corresponding to the part is recessed to form an accommodating groove 10b. At least some battery cells 12 are located in the accommodating groove 10b.

The battery cell 12, i.e., a cell, is a smallest unit capable of generating electric energy in the battery 10.

In this way, it is conducive to dispose a larger quantity of battery cells 12 or battery cells of a larger volume within the battery 10, so as to improve the capacity of the battery 10.

It may be understood that a height of the battery cell 12 extending into the accommodating groove 10b is larger than that of another battery cell 12.

In some embodiments, space within the protruding platform 11 is configured to arrange a bus component. The bus component is configured to electrically connect the battery cells 12, so that a more regular space within the battery 10 is configured to arrange the battery cells 12, thereby increasing the number of arranged battery cells 12.

Five specific embodiments of the present disclosure are described in detail below with reference to the accompanying drawings.

### First Embodiment

Referring to FIG. 1 to FIG. 3, there are two rows of seats 20. The front row includes two seats 20 spaced apart in a width direction of a vehicle 100 to form a first gap 20a. The rear row includes one seat 20. There is one protruding platform 11. The protruding platform 11 extends in a length direction of the vehicle 100, and passes through the first gap 20a to a second gap 20b between the seat 20 in the rear row and a battery 10.

### Second Embodiment

Referring to FIG. 4 and FIG. 5, there are two rows of seats 20. The front row includes two seats 20 spaced apart in a width direction of a vehicle 100 to form a first gap 20a. The rear row includes one seat 20. There are two protruding platforms 11 which both extend in the width direction of the vehicle 100. One of the protruding platforms 11 is located below the seats 20 in the front row and passes through the first gap 20a in the width direction, and the other protruding platform 11 is located below the seat 20 in the rear row.

### Third Embodiment

Referring to FIG. 6 and FIG. 7, there are two rows of seats 20. The front row includes two seats 20 spaced apart in a width direction of a vehicle 100 to form a first gap 20a. The rear row includes one seat 20. There are two protruding platforms 11. One of the protruding platforms 11 extends in a length direction of the vehicle 100 and passes through the first gap 20a, and the other protruding platform 11 is located below the seat 20 in the rear row. The two protruding platforms 11 are spaced apart in the length direction of the vehicle 100.

### Fourth Embodiment

Referring to FIG. 8 to FIG. 10, there are two rows of seats 20. The front row includes two seats 20 spaced apart in a width direction of a vehicle 100. The rear row includes one seat 20. There are two protruding platforms 11. The protruding platforms 11 both extend in a length direction of the vehicle 100. The two protruding platforms 11 are respectively located at one end of a battery 10 in the width direction of the vehicle 100. The seats 20 are located between the two protruding platforms 11.

### Fifth Embodiment

Referring to FIG. 11 to FIG. 13, there are two rows of seats 20. The front row includes two seats 20 spaced apart in a width direction of a vehicle 100 to form a first gap 20a. The rear row includes one seat 20. There are three protruding platforms 11 which both extend in a length direction of the vehicle 100. Two of the protruding platforms 11 are respectively located at one end of a battery 10 in the width direction of the vehicle 100, and the seats 20 are located between the two protruding platforms 11. The other protruding platform 11 passes through the first gap 20a and extends below the seat 20 in the rear row.

The embodiments/implementations provided in the present disclosure may be combined with each other in a case of no contradiction.

The foregoing descriptions are merely preferred embodiments of the present disclosure, but are not intended to limit the present disclosure. The present disclosure may include various modifications and changes for a person skilled in the art. Any modification, equivalent replacement, or improvement made within the spirit and principle of the present disclosure shall fall within the protection scope of the present disclosure.

### INDUSTRIAL APPLICABILITY

Embodiments of the present disclosure provide a vehicle. The vehicle includes a battery and a seat. A protruding platform is arranged on a top surface of the battery. The seat is arranged above the battery. The seat includes a seat cushion allowing a passenger to sit on. The protruding platform is located below the seat, and in a projection perpendicular to a vertical direction, at least a part of a projection of the protruding platform is located within a projection range of the seat cushion. By arranging the protruding platform on the battery of the vehicle, the volume of the battery within the vehicle can be increased, thereby increasing the capacity of the battery. Also, the protruding platform utilizes space below the seat cushion, to reduce the probability of passengers colliding with the protruding platform when riding in the vehicle, thereby reducing the occupation of normal active space of passengers caused by the arrangement of the protruding platform, improving user experience, and improving the space utilization rate within the vehicle.

## Claims

1. A vehicle, comprising a battery and a seat, wherein a protruding platform is arranged on a top surface of the battery, and the seat is arranged above the battery and comprises a seat cushion allowing a passenger to sit on, wherein the protruding platform is located below the seat, and in a projection perpendicular to a vertical direction, at least a part of a projection of the protruding platform is located within a projection range of the seat cushion.

2. The vehicle according to claim 1, wherein the vehicle comprises a plurality of seats, the plurality of seats being arranged in at least two rows spaced apart in a length direction of the vehicle, wherein at least one row has a plurality of seats with a first gap formed between the seats spaced apart in a width direction of the vehicle, and a part of the protruding platform is located in the first gap.

3. The vehicle according to claim 2, wherein the protruding platform extends in the length direction of the vehicle and is partially located in the first gap.

4. The vehicle according to claim 3, wherein the protruding platform extends to below the seat cushions of an adjacent row of seats.

5. The vehicle according to any one of claims 2 to 4, wherein the protruding platform extends in the width direction of the vehicle, and the protruding platform is partially located below the seat cushion while being partially located in the first gap.

6. The vehicle according to any one of claims 1 to 5, wherein the vehicle comprises a plurality of seats, the plurality of seats being arranged in at least two rows spaced apart in the length direction of the vehicle, wherein at least one row comprises one seat which extends in the width direction of the vehicle, a width of the seat is not less than a width of the top surface of the battery, and the protruding platform extends in the width direction and is located below the row of seat.

7. The vehicle according to any one of claims 1 to 6, wherein at least two protruding platforms are arranged on the top surface of the battery, wherein the at least two protruding platforms extend in the length direction of the vehicle and are respectively located at ends of the battery in the width direction of the vehicle, and the seat is located between the at least two protruding platforms.

8. The vehicle according to any one of claims 1 to 7, wherein at least a part of the seat cushion and the top surface of the battery are spaced apart from each other in the vertical direction to form a second gap, and at least a part of the protruding platform is located in the second gap.

9. The vehicle according to claim 8, wherein the seat comprises a support leg, and the seat cushion and the battery are spaced apart from each other in the vertical direction to form the second gap, wherein the support leg is connected between the seat cushion and the battery.

10. The vehicle according to claim 9, wherein:
the support leg is arranged on a top surface of the protruding platform; or
the seat comprises a plurality of support legs spaced apart in the width direction of the vehicle, wherein the protruding platform is located between two adjacent support legs in the width direction of the vehicle.

11. The vehicle according to any one of claims 1 to 10, wherein the protruding platform has a height of not greater than 50 cm.

12. The vehicle according to any one of claims 1 to 11, wherein the battery comprises an accommodating box and a plurality of battery cells, wherein:
an accommodating cavity is provided in the accommodating box, and the battery cells are arranged in the accommodating cavity;
a part of the accommodating box protrudes in a direction away from the battery cells to form the protruding platform, wherein an inner wall of the accommodating cavity corresponding to said part of the accommodating box is recessed to form an accommodating groove, and at least some battery cells are located in the accommodating groove.
